# EUROPÄISCHE PATENTANMELDUNG

(11) **EP 1 659 659 A1**
(43) Veröffentlichungstag der Anmeldung: **24.05.2006**
(21) Anmeldenummer: 04027809.5
(22) Anmeldetag: 23.11.2004
(51) Int. Cl.: H01R 3/00, H01M 2/10, E05B 19/04

(54) **Halte- und Kontaktiervorrichtung für eine Knopfzelle und Verfahren zur Herstellung einer solchen**

(71) Anmelder: Huf Hülsbeck & Fürst GmbH & Co. KG, 42551 Velbert (DE)
(72) Erfinder: Habecke, Matthias, 45529 Hattingen (DE)

(57) **Zusammenfassung**

Die Erfindung betrifft eine Halte- und Kontaktiervorrichtung für eine Knopfzelle und die Verwendung einer solchen Halte- und Kontaktiervorrichtung in Fernbedienungseinrichtungen zum Entriegeln/Verriegeln von Kraftfahrzeugen. Bei derartigen Vorrichtungen soll das Batteriefach möglichst von weiteren Elektronikbauteilen getrennt sein, um zerstörende Berührungen zu vermeiden. Zur Kontaktierung der Ober- und Unterseite der Knopfzelle werden Federbügel verwendet, die mit der Elektronik über Kabel und Lötverbindungen verbunden sind. Zur Vermeidung einer aufwendigen Montage und zur guten Zugänglichkeit des Batteriefachs wird vorgeschlagen blattfederartige Kontaktelemente (19 31, 34; 22, 27, 35) zu verwenden, die, verbunden mit dem Batteriefach (11, 13, 14), eine kraftschlüssige Verbindung zu einer zu versorgenden Elektronikbaugruppe bilden.

## Beschreibung

Die vorliegende Erfindung betrifft eine Halte- und Kontaktiervorrichtung für eine Knopfzelle, insbesondere die Verwendung einer solchen Halte- und Kontaktiervorrichtung in Fernbedienungsvorrichtungen zum Entriegeln/Verriegeln von Kraftfahrzeugen, wobei die Kontaktiervorrichtung zur elektrischen Energieversorgung der Elektronik einer solchen Fernbedienungseinrichtung dient.

Bekannte elektronischer Schlüssel weisen in der Regel zur Energieversorgung des Elektronikteils mit seinem Sender und Empfängerbausteinen Kopfzellen auf, die Teils direkt mittels Haltevorrichtungen auf Platinen der Elektronikelemente gehalten werden. Aufgrund der Problematik, dass bei einem Batteriewechsel der Bediener aus Versehen die nach Demontage des Schlüssels frei liegende Elektronik beschädigen kann, beispielsweise durch mechanische Beeinträchtigung oder elektrostatische Beeinträchtigung, werden die elektronischen Bereiche mittels gehäuseförmiger Batteriehalter abgeschirmt. Beim Wechsel einer Knopfzelle hat der Bediener nur Zugriff auf das Batteriegehäuse.

Knopfzellen weisen eine Ober- und Unterseite aus, die auch zur Energieübertragung dienen, wobei jede Seite einen bestimmten Pol darstellt. Zusätzlich können die vorstehenden Seiten zur Kontaktierung eines Pols genutzt werden.

Aus der DE 34 19 333 ist ein solches halboffenes Gehäuse bekannt. Die Kontaktierung erfolgt mittels elektrischen Kontakte, die durch den Gehäuseboden zum Elektrobauteil geführt werden. Die elektrischen Kontakt werden dabei von der offenen Seite des Gehäuses eingesetzt und mit der Platine verlötet.
Im Rahmen der Massenfertigung von elektronischen Schlüsseln für Kraftfahrzeuge ist diese Montageform aufwendig und teuer.

Der vorliegenden Erfindung liegt somit die Aufgabe zugrunde den Aufbau einer Halte - und Kontaktiervorrichtung, insbesondere zur Anwendung in Fernbedienungsvorrichtungen zum Verriegeln/Entriegeln von Schlössern und Verschlüssen von Kraftfahrzeugen so zu gestalten, daß eine einfache Montage der Haltevorrichtung an sich und der späteren Montage in der Fernbedienungsvorrichtung ermöglicht wird.

Diese Aufgabe wird durch die im Anspruch 1 aufgeführten Merkmale gelöst.

Die Unteransprüche 2 bis 11 zeigen vorteilhafte Ausführungsformen und Weiterbildungen auf.

Die Ansprüche 12 und 13 kennzeichnet eine Fernbedienungsvorrichtung die erfindungsgemäße Halte- und Kontaktiervorrichtungen für eine Knopfzelle aufweisen und ist auf die elektrische Verbindung zwischen der Elektrobaugruppe und der Knopfzelle gerichtet.

Anspruch 14 ist auf ein Verfahren zum Herstellen einer erfindungsgemäßen elektrischen Verbindung gerichtet.
Anspruch 15 ist eine vorteilhafte Weitergestaltung des Verfahrens.

In den Zeichnungen ist die Erfindung schematisch in einem Ausführungsbeispiel ausgeführt:

Es zeigen:
- Fig.1:: Eine perspektivische Ansicht einer Fernbedienungseinrichtung zum Verriegeln/Entriegeln von Schlössern und Verschlüssen an Kraftfahrzeugen

- Fig.2:: Eine perspektivische Ansicht einer Halte- und Kontaktvorrichtung für eine Knopfzelle im Schnitt
- Fig.3:: Eine perspektivische Ansicht der Vorrichtung von der Unterseite
- Fig. 4:: Einen Querschnitt A-A durch die Haltevorrichtung
- Fig. 5:: Eine perspektivische Ansicht des ersten Kontaktelementes
- Fig. 6:: Eine perspektivische Ansicht des zweiten Kontaktelementes

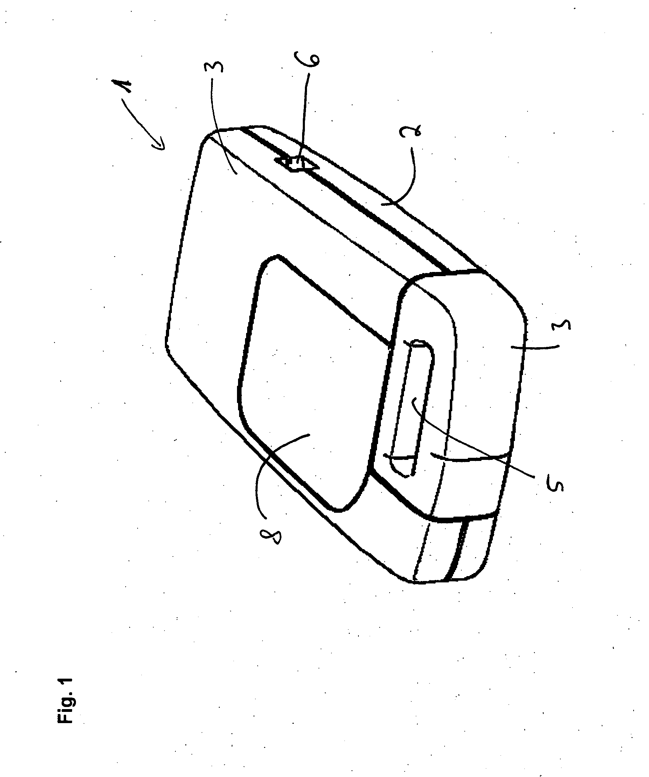

Figur 1 zeigt eine Fernbedienungsvorrichtung 1 zum Verriegeln oder Entriegeln von Schlössern und Verschlüssen an Kraftfahrzeugen in einer perspektivischen Ansicht in montierter Form. Dieser elektronische Schlüssel 1 besteht aus einer Oberschale 2 und einer Unterschale 3 sowie einem eingeschobenen mechanischen Notschlüssel 4. Der Notschlüssel 4 weist in seinem Griffteil eine Ausnehmung 5 zur Verwendung als Schlüsselaufhänger auf. Der Notschlüssel kann bei Betätigung einer Taste oder Schiebers, der auf der Vorderseite des elektronischen Schlüssels 1 oder der Notschlüssels angeordnet ist, entriegelt werden, so daß dieser im Notfall, z.B. bei Energieausfall am Fahrzeug, der Fernbedienungsvorrichtung 1 entnommen werden kann. Damit würde dann ein am Fahrzeug befindlicher Notschließzylinder getätigt, um ohne Funkkommunikation in das Fahrzeug zu gelangen, um Probleme zu beseitigen.

Auf der Oberschale der Fernbedienungsvorrichtung 1 befinden sich entsprechende Taster, mit deren Betätigung die gewünschten Funktionen, wie Öffnen oder Verriegeln des Fahrzeugs ausgelöst werden. Des weiteren befinden sich innerhalb der Oberschale 2 und Unterschale 3 die notwendige Elektronik, wie Antennen, Sender und Empfängerbausteine und ggf. Auswerteeinheiten zum Erstellen und Bearbeiten von Codesignalen.

Ein solcher elektronischer Schlüssel kann ggf. auch ohne Tastenbetätigung zum automatischen Öffnen eines Kraftfahrzeuges bei bloßer Annäherung an das Fahrzeug benutzt werden. Die Annäherung wird von Sensoren am Fahrzeug detektiert, wodurch die Codekommunikation zwischen der Fernbedienungsvorrichtung 1 und dem Kraftfahrzeug initiiert wird. Nach erfolgreichem Austausch des Codes wird beispielsweise durch die Steuereinheit des Fahrzeugs das Entriegeln der Türschlösser veranlaßt.

Die Fernbedienungsvorrichtung wird im Fahrzeug üblicherweise als berechtigendes Element in einen Zündanlaßschalter, z.B. im Armaturenbereich des Fahrzeuges, eingebracht. Zur Verrastung des elektronischen Schlüssels 1 weist dieser Rastvertiefungen 5 an den Seitenflächen auf .

In der Unterschale 3 ist eine Halte- und Kontaktiervorrichtung 7 integriert. Dies stellt das Gehäuse dar. Sie wird von außen von einem Batteriefachdeckel 8 abgedeckt. Nach Entnahme des Notschlüssels 3 kann der Batteriefachdeckel 8 in einfacher Weise abgenommen werden, um die Knopfzellen tauschen zu können.

Oberschale und Unterschale werden mittels üblicher Verbindungsverfahren nach Komplettierung mit Elektronik und sonstigen notwendigen Bauteilen zusammengefügt, beispielsweise durch Verkleben, Reibschweißen oder Verrasten.

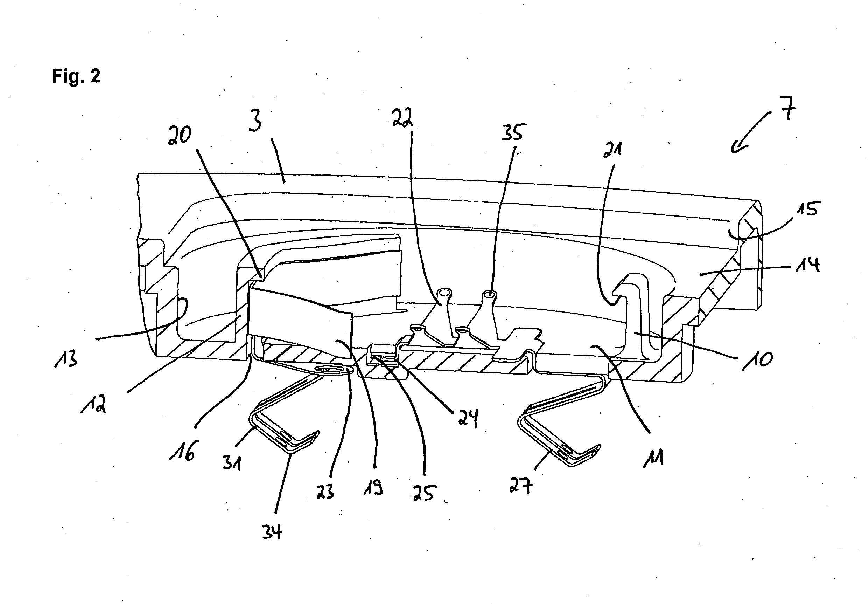

Figur 2 zeigt den Teilbereich der Unterschale 3 mit der integrierten Halte- und Kontaktiervorrichtung 7 zur Aufnahme einer Knopfzelle zur elektrischen Stromversorgung der Elektronikbaugruppe, die in der Oberschale angeordnet ist.

Die Halte- und Kontaktiervorrichtung 3 ist mit der Aufnahmewanne 9 einteilig ausgeführt.
Die Teile bestehen aus Kunststoff und werden im Kunststoffspritzgießverfahren in einem Prozeß hergestellt. In der Aufnahmewanne 9 ist ein federnder Haltehaken 10 angeordnet, der einteilig aus dem Boden 11 der Aufnahmewanne 9 herausgebildet ist.

Des weiteren ist gegenüber dem elastischen Haltehaken 10 eine orthogonal zum Wannenboden 11 stehende Haltewand angeordnet, die auch aus dem Boden 11 herausgebildet ist. Diese Haltewand könnte sich im Rahmen einer anderen Konstruktion mit der Wannenwand 13 decken. Die Haltewand 12 ist C-förmig angeordnet, so daß diese einen radialen Teil einer Knopfzelle umfaßt und damit als Widerlager gegen die durch den Haltehaken 10 auf die Kopfzelle wirkende Vorspannkraft wirkt. Die Haltewand weist am oberen Ende einen zum Zentrum der Aufnahmewanne 9 gerichteten Vorsprungkante auf, die eine eingesetzte Knopfzelle formschlüssig in der Aufnahmewanne 9 hält. Eine eingesetzte Knopfzelle wird somit formschlüssig durch die Vorsprungkante 20 und den Hakenvorsprung 21 gehalten.
Über Federkontaktelemente 22 eines ersten Kontaktelementes 18 wird eine eingesetzte Knopfzelle gegen die Vorsprungkante 20 und den Hakenvorsprung 21 vorgespannt. damit ist eine sichere Kontaktierung zur Knopfzelle realisiert und die Knopfzelle genügend sicher positioniert.

Zur Entnahme einer Knopfzelle wird der elastische Haltehaken 10 in Richtung zur nächstliegenden Wannenwand 13 gebogen. Der Formschluß wird aufgehoben und die Knopfzelle kann bei abgenommenem Batteriefachdeckel herausgenommen werden. Der Batteriefachdeckel liegt auf der Fläche 14 auf und wird von der Seitenfläche 15 eingefaßt.

Im Boden 11 der Halte- und Kontaktiervorrichtung 7 ist eine längliche schlitzförmige Bodenausnehmung 16 vorgesehen, die sich entlang der Haltewand erstreckt. Die schlitzförmige Bodenausnehmung 16 ist auf der zur Mitte Aufnahmewanne 9 gerichteten Seite der Wannenwand angeordnet. Sie dient dazu ein erstes Kontaktelement montieren zu können.
Dazu werden die Kontaktfahnen zur seitlichen Kontaktierung eine Knopfzelle von der der Haltewand 12 abgewandten Seite des Bodens 11 der Halte- und Kontaktiervorrichtung 7 durch den Schlitz 16 in den Innenbereich der Wannenwand 13 geschoben und von unten befestigt.

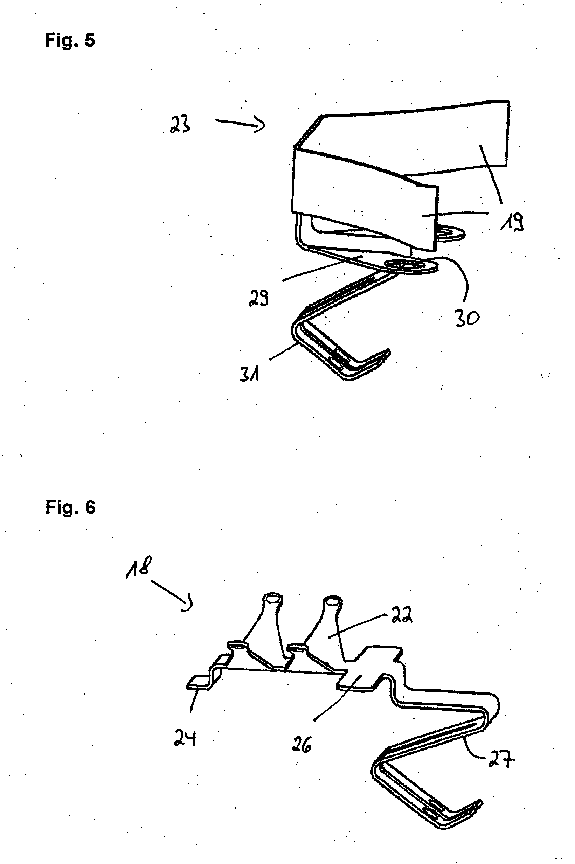

In Figur 6 ist das erste Kontaktelement 18 als Einzelteil dargestellt. Es handelt sich um ein vorgebogenes Blattfederelement. Der Aufbau beginnt mit einem Befestigungsvorsprung 24, der nach Montage des Kontaktelementes in eine Vertiefung 25 einspringt. Dadurch wird eine Rückbewegung, d.h. Demontage des Kontaktelementes 18 aus der Betriebsposition unmöglich gemacht.

An den Befestigungsvorsprung schließen sich die Federkontaktelemente 22 an, die mit der Knopfzelle unter einer definierten Federkraft in Kontakt stehen.
Danach schließt sich eine Auflageplatte 26 an, mit der sich das Kontaktelement zusätzlich großflächig gegen den Boden 11 der Vorrichtung 7 abstützen kann. Im Anschluß folgt ein S-förmig gebogener Federblechabschnitt 27, der im eingebauten Zustand durch eine 2. Ausnehmung 28 den Kontakt zur Elektronikbaugruppe der Fernbedienungsvorrichtung 1 bildet.

In Figur 5 ist das zweite Kontaktelement 23 gezeigt, das zwei großflächige Kontaktfahnen 19 aufweist, mit denen die Seitenflächen der Knopfzelle kontaktiert werden.
Dieser Bereich wird von der unteren Seite des Bodens 11 in den Innenbereich der Aufnahmewanne 9 eingebracht bis die Auflageabschnitte 29 an Außenseite der Aufnahmewanne 9 anliegen. Durch die Lochausnehmungen 30 ragt dann ein kleiner Materialvorsprung der Aufnahmewanne 9, der im Anschluß des Einsetzens mittels eines Prägestempels heiß verprägt wird, so daß das Kunststoffmaterial 32 den Auflageabschnitt umschließt und damit das zweite Kontaktelement formschlüssig in der Einbauposition sichert.
Im Anschluß an den Auflageabschnitt 29 erstreckt sich, wie beim ersten Kontaktelement 23 ein s-förmig gebogener Federblechabschnitt 31 zur Kontaktierung der Elektronikbaugruppe.

Beide Kontaktelemente 18, 23 sind vorgebogene Bauteile, die in Aufnahmewanne 9 eingesetzt werden. Durch Verwendung solcher Bauteile entfällt der sonst übliche und aufwendige Biegevorgang von Kontaktfederblechabschnitten im eingebauten Zustand. Gerade bei den Massenstückzahlen im Automobilbereich kann dadurch eine Halte- und Kontaktiervorrichtung wirtschaftlich hergestellt werden.

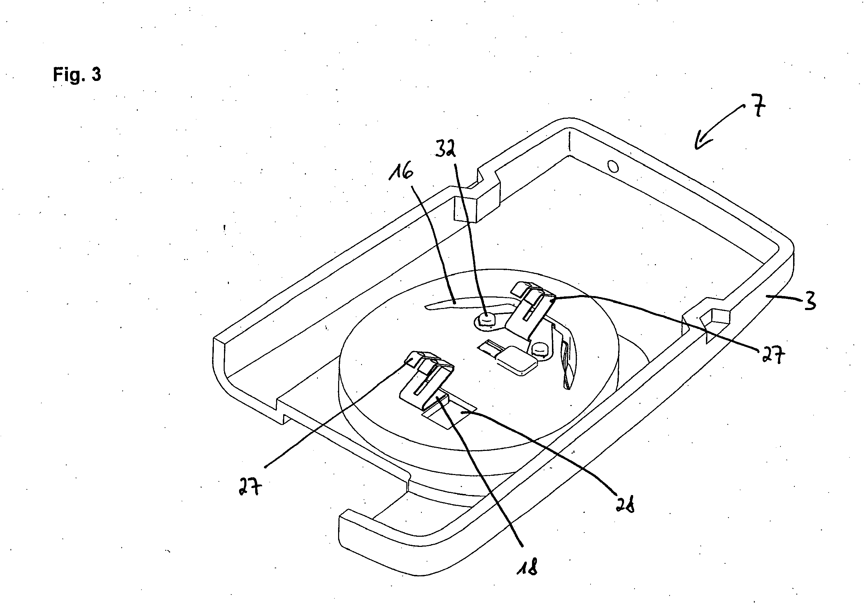

Figur 3 zeigt eine perspektivische Ansicht der fertig vornotierten Unterschale 3 von der Unterseite. Der Federblechabschnitt 27 des 1. Kontaktelementes ist durch die 2. Ausnehmung 28 im Boden 11 Aufnahmewanne 9 von der Innenseite der Aufnahmewanne 9 hindurch gesteckt und seitlich in die dargestellte Position verschoben worden.

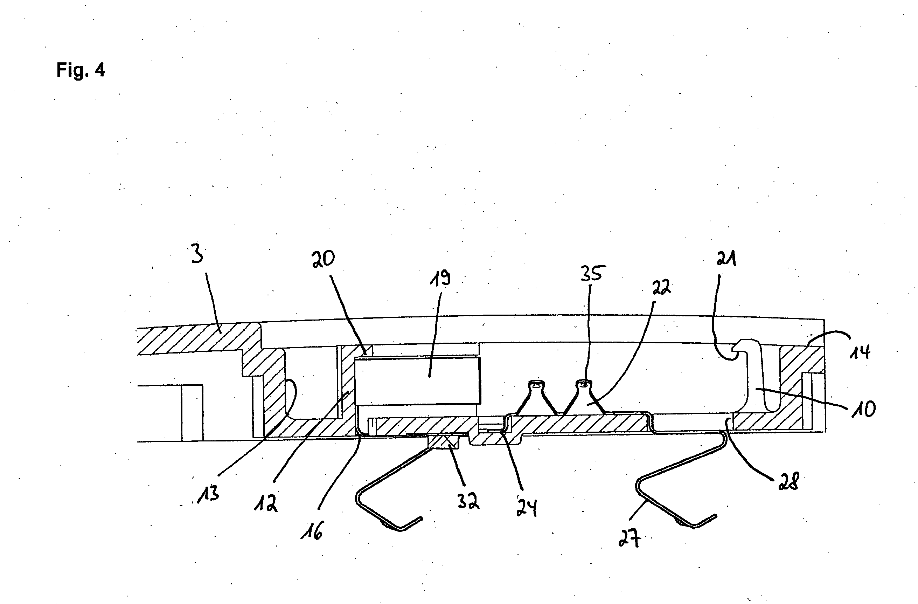

Figur 4 zeigt zur Verdeutlichung die Unterschale 3 im vornotierten Zustand im Schnitt.

## Patentansprüche

1. Halte- und Kontaktiervorrichtung für eine Knopfzelle, die ein nach oben offenes Gehäuse (3) aus Kunststoff aufweist und darin Kontaktelemente (18,23) zur Kontaktierung der Kopfzellenpole angeordnet sind, wobei die Kontaktelemente (18, 23) durch mindestens eine Ausnehmung (16) im Boden (11) des Gehäuses (3) aus dem Gehäuse (3) heraus geführt sind, um dort den Kontakt zur eine Elektronikbaugruppe herzustellen, **dadurch gekennzeichnet, dass** die Kontaktelemente (18, 23)außerhalb des Gehäuses eine kraftschlüssige Verbindung zu einer Elektronikbaugruppe bilden.

2. Vorrichtung nach Anspruch 1, **dadurch gekennzeichnet, dass** die Kontaktelemente (13, 23)Blattfederelemente sind.

3. Vorrichtung nach Anspruch 2, **dadurch gekennzeichnet, dass** die Kontaktelemente(18, 23) im Endbereich zur Kontaktierung der Elektronikbaugruppe S-förmig gebogen ist, um gute federnde Eigenschaften zu erreichen.

4. Vorrichtung nach einem der vorhergehenden Ansprüche, **dadurch gekennzeichnet, dass** die Knopfzellenkontaktfläche (33) und die Elektronikkontaktfläche (34) mindestens eines Kontaktelementes (18, 23) orthogonal zueinander stehen.

5. Vorrichtung nach einem der vorhergehenden Ansprüche, **dadurch gekennzeichnet, dass** mindestens eine Ausnehmung (16, 28) im Bodenbereich (11) des Gehäuses (3) schlitzförmig ist.

6. Vorrichtung nach Anspruch 5, **dadurch gekennzeichnet, dass** der Schlitz sich über eine Teilbereich entlang einer Stützwand (12) erstreckt.

7. Vorrichtung nach einem der Ansprüche von 4 bis 6, **dadurch gekennzeichnet, dass** ein zweites Kontaktelement (18) mit seinem Polkontaktteil (27) von der Innenseite des Gehäuses (3) durch eine Ausnehmung (28) im Bodenbereich (9) des Gehäuses (3) geführt ist.

8. Vorrichtung nach einem der Ansprüche von 4 bis 7, **dadurch gekennzeichnet, dass** mindestens ein Kontaktelemente (18, 23) zur Fixierung mit dem Kunststoff (32) des Bodenteils (9) verprägt ist.

9. Vorrichtung nach Anspruch 7, **dadurch gekennzeichnet, dass** das zweite Kontaktelement (18) formschlüssig in Position gehalten wird.

10. Vorrichtung nach einem der vorhergehenden Ansprüche, **dadurch gekennzeichnet, dass** im die Knopfzelle aufnehmenden Innenbereich federnde Haltelemente (10) zur Halterung der eingesetzten Knopfzelle integriert sind.

11. Vorrichtung nach Anspruch 10, **dadurch gekennzeichnet, dass** das Halteelement ein federnder Haken(10) ist, der aus dem Boden (9) des Gehäuses(3) ragt.

12. Fernbedienungsvorrichtung zum Verriegeln/Entriegeln von Schlössern und Verschlüssen an Kraftfahrzeugen, **dadurch gekennzeichnet, dass** die Fernbedienungsvorrichtung (1) mindestens eine Halte- und Kontaktiervorrichtung für eine Knopfzelle nach einem der vorhergehenden Ansprüche aufweist.

13. Fernbedienungsvorrichtung nach Anspruch 12, **dadurch gekennzeichnet, dass** unter der Halte- und Kontaktierungsvorrichtung (7) eine Elektronikbaugruppe angeordnet ist und darauf die Gegenkontaktstellen zur Kontaktierung der Kontaktelemente der Batterie angeordnet sind, wobei die Elektronikkontaktfläche im Einbauzustand gegen die Gegenkontaktstelle gepreßt ist.

14. Verfahren zur Herstellung einer Halte-und Kontaktiervorrichtung (1) für eine Knopfzelle mit einem nach oben offenen Gehäuse (3) und durch das Bodenteil verlaufende Kontaktelementen (18, 23) **gekennzeichnet durch** die folgenden Schritte:
- Herstellen eines nach oben offenen Gehäuses 3 mit seinen Aussparungen (16, 28) aus Kunststoff im Spritzgießtechnologie,
- Herstellen von vorgebogenen Kontaktelementen (18, 23)
- Einsetzen der Kontaktelemente (18, 23) in beliebiger Reihenfolge, wobei mindestens ein Kontaktelement (18, 23) von der abgewandten Seite des Knopfzellen aufnehmenden Gehäuseinnenteils **durch** Ausnehmungen (16, 28) im Boden einsetzt wird.

15. Verfahren nach Anspruch 12, **dadurch gekennzeichnet, dass** das mindestens ein Kontaktelement mit dem Gehäuseboden (9)verprägt wird.
